# DEMANDE DE BREVET EUROPEEN

(11) **EP 2 425 948 A2**
(43) Date de publication de la demande: **07.03.2012**
(21) Numéro de dépôt: 11179663.7
(22) Date de dépôt: 31.08.2011
(51) Int. Cl.: B28B 1/00

(54) **Béton garni d'une plante**

(30) Priorité: 01.09.2010 FR 1056949
(71) Demandeur: X'TU, 75010 Paris (FR)
(72) Inventeur: Legendre, Anouk, 75010 Paris (FR); Desmazieres, Nicolas, 75010 Paris (FR)
(74) Mandataire: Enderlin, Eric André

(57) **Abrégé**

La présente invention se rapporte à un procédé de fabrication d'un béton garni d'au moins une plante ainsi qu'au béton garni d'au moins une plante issu de ce procédé, à l'utilisation de ce béton pour la fabrication d'un mur, d'un habillage de façade, d'un élément préfabriqué ou d'objets ornementaux.

La présente invention trouve notamment des applications dans les domaines de l'architecture, de l'aménagement extérieur et intérieur, ou du paysagisme.

## Description

### Domaine technique

La présente invention se rapporte à un procédé de fabrication d'un béton garni d'au moins une plante.

La présente invention se rapporte également au béton garni d'au moins une plante issu de ce procédé ainsi qu'à l'utilisation de ce béton pour la fabrication d'un mur, d'un habillage de façade, d'un élément préfabriqué ou d'objets ornementaux.

La présente invention trouve notamment des applications dans les domaines de l'architecture, de l'aménagement extérieur et intérieur, ou du paysagisme.

### Exposé de l'invention

La présente invention a notamment pour objet un procédé de fabrication d'un béton garni d'au moins une plante comprenant les étapes successives suivantes:
(a) disposition d'éléments granulaires dans un moule,
(b) coulage d'un liant formant avec les éléments granulaires le béton, une partie desdits éléments granulaires émergeant dudit liant et formant des espaces intergranulaires dépourvus de liant,
(c) séchage du béton au moins à 80% de sa résistance finale, et
(d) application sur le béton séché au moins à 80% de sa résistance finale de graines, de spores, de fragments de plante ou de plants dans des espaces intergranulaires dépourvus de liant.

Selon l'invention, on entend par « béton garni d'une plante », un béton sur lequel des plantes sont présentes. Par exemple, les plantes peuvent être des plantes à fleurs, des mousses, des fougères, des graines germées, des rhizomes, des plants, des graines ou des spores.

Selon l'invention, on entend par « plante à fleurs », toute plante appartenant division des *Magnoliophyta,* également appelée angiosperme.

Selon l'invention, on entend par « mousses », toute plante appartenant l'embranchement des *Bryophyta.*

Selon l'invention, on entend par « fougères », toute plante appartenant division des *Pteridophyta.*

Par exemple, selon l'invention, les graines, les spores, les fragments de plante ou les plants peuvent être choisis dans le groupe comprenant les légumineuses, les succulentes, les calcicoles et les plantes à stolon. En d'autres termes les plantes à fleurs, mousses, fougères, graines germées, rhizomes, plants, graines ou spores peuvent être choisis dans le groupe comprenant les légumineuses, les succulentes, les calcicoles et les plantes à stolon.

Selon l'invention, on entend par « légumineuses », toute plante appartenant à la famille des *Fabaceae.* Par exemple, les légumineuses peuvent appartenir à une sous-famille choisies dans le groupe comprenant les *Caesalpinoideae,* les *Mimosoideae* et les *Faboideae.*

Selon l'invention, on entend par « succulentes », toute plante adaptée pour survivre dans des milieux arides. Par exemple, les succulentes peuvent appartenir à une famille choisies dans le groupe comprenant les *Aizoaceae, Agavaceae, Apocynaceae, Asphodelaceae, Cactaceae, Crassulaceae, Cucurbitaceae, Didiereaceae, Euphorbiaceae, Geraniaceae* et *Portulacaceae.*

Selon l'invention, on entend par « calcicoles », toute plante adaptées pour survivre sur les sols riches en calcium. Par exemple, les calcicoles sont choisies dans le groupe comprenant *Bupleurum falcatum, Digitalis lutea, Geranium sanguineum, Helleborus foetidus, Hepatica nobilis, Inula conyza, Lactuca perennis, Laserpitium latifolium, Origanum vulgare, Teucrium chamaedrys, Orchis mascula* et *Orchis purpurea.*

Selon l'invention, on entend par « plantes à stolon », toute plante possédant ou capable de produire un stolon. Par exemple la plante à stolon peut appartenir à un genre choisi dans le groupe comprenant *Argentina, Cynodon, Fragaria, Pilosella.* Par exemple la plante à stolon peut être *Zoysia japonica* ou *Ranunculus repens.*

A titre l'exemple de plantes utilisation selon l'invention, on peut citer par exemple les joubarbes, par exemple *Sempervivum altum, Sempervivum calcareum, Sempervivu montanum, Jobivarba globifera, Jovibarba heuffelii, Jobibarba hirta;* les sédums, par exemple *Sedum alpester, Sedum rupestre; Linaria alpina, Hepericum nummularium, Sedum* acre, *Sedum anglicum, Sedum corsicum, Sedum stahlii, Sedum floriferum;* les trèfles, par exemple *Trifolium montanum, Trifoliumalpestre, Trifolium incarnatum,*

Selon l'invention, les graines peuvent être enrobées d'une gangue, ladite gangue comprenant des éléments nutritifs et/ou protecteurs et/ou adhésifs et/ou stimulant la germination.

Par exemple les éléments nutritifs peuvent être des engrais. Par exemple les éléments protecteurs peuvent être des produits phytosanitaires. Par exemple, les éléments adhésifs peuvent être de la résine. Par exemple les éléments stimulant la germination peuvent être au moins un engrais, par exemple une hormone de germination ou une hormone de croissance.

Selon l'invention, on entend par « graines enrobées d'une gangue », des graines recouvertes totalement ou partiellement d'une substance permettant la nutrition et/ou la protection et/ou l'adhésion et/ou la stimulation de la germination des graines dans les espaces intergranulaires ou sur les éléments granulaires émergeant du liant. Par exemple, la gangue comprend au moins un élément nutritif, par exemple au moins un engrais, un élément protecteur, par exemple au moins un produit phytosanitaire, et/ou un élément adhésif, par exemple une résine. La gangue peut également comprendre une hormone de germination. Par exemple, lorsque la plante est une légumineuse, la gangue peut également comprendre en outre des rhizobacterium.

Selon l'invention, les graines peuvent être « préparées » afin de favoriser leur germination. Il s'agit de toute préparation connue de l'homme du métier en fonction des graines utilisées. Par exemple, les graines peuvent être humidifiées par vaporisation, humidifiée par trempage, fendues ou les deux ou vernalisées. En d'autres termes, les graines peuvent être humidifiées par vaporisation et/ou humidifiées par trempage et/ou fendues et/ou vernalisées.

Par exemple, les graines peuvent être humidifiées avant d'être appliquées sur le béton séché au moins à 80% de sa résistance finale. Par exemple, les graines sont placées dans de l'eau, dans un tissu humide ou dans du coton humide. Par exemple, les graines sont humidifiées pendant une durée allant de 1 à 5 jours, par exemple pendant 2 jours.

Selon l'invention, on entend par « vernalisation », la période de froid subit par la plante ou la graine nécessaire pour la faire passer du stade végétatif au stade reproductif. L'homme du métier est à même de déterminer quelle température appliquer à une graine et pendant quelle durée pour la vernaliser.

Selon l'invention, on entend par « béton séché au moins à 80% de sa résistance finale », un béton ayant séché au moins 25 jours après le coulage du liant, au moins 26 jours, par exemple, au moins 27 jours, par exemple au moins 28 jours, par exemple au moins 29 jours. Avantageusement, la durée de séchage du béton au moins à 80% de sa résistance finale est comprise entre 25 et 32 jours, par exemple entre 27 et 29 jours, par exemple 28 jours.

En effet, de manière totalement inattendu, les inventeurs ont constaté qu'à un séchage du béton inférieur à 80% de sa résistance final, les graines ne germent pas ou peu. Au-delà de ces 80%, les inventeurs ont constaté de manière totalement inattendu que la germination est remarquable.

Par exemple le béton peut être séché par tout moyen connu de l'homme du métier. Par exemple le béton peut être séché à l'air ambiant ou par ventilation.

Selon un aspect de la présente invention, ledit coulage de l'étape (b) peut par exemple être réalisé dans un moule prévoyant des creux permettant l'introduction d'un substrat de culture. En d'autres termes, le moule présente des aspérités permettant la formation de creux dans le béton. Ces creux qui sont formé dans le béton par le moulage peuvent être destinés à recevoir un substrat de culture, des racks ou des godets.

Le moule peut avoir toute forme appropriée permettant d'obtenir une forme souhaitée au béton. Par exemple, le moule peut permettre d'obtenir un objet choisi dans le groupe comprenant un parpaing, un banc, une plaque et un élément creux.

Le moule peut être en tout matériau connu de l'homme du métier pour couler un béton. Par exemple, le moule peut être dans un matériau choisi dans le groupe comprenant le bois, le PVC, le contreplaqué, le caoutchouc et le banche.

Le procédé de la présente invention peut, en outre comprendre une étape supplémentaire (x) précédente, successive ou concomitante à l'étape (d) consistant à appliquer un substrat de culture dans des espaces intergranulaires dépourvus de liant ou dans les creux.

Selon l'invention, on entend par « substrat de culture », tout matériau sur ou dans lequel des plantes peuvent se développer. Avantageusement, le substrat de culture permet de maintenir des graines, plants ou spores, dans les espaces intergranulaires ou sur les éléments granulaires émergeant du liant. Par exemple, le substrat de culture peut être choisi dans le groupe comprenant de la gélatine, de l'agar-agar, de la pectine, du gel de konjac, une gelée, de la terre, de la terre arable, de l'argile, un limon, du terreau, un engrais, de la paille, une bombe végétale, des fibre de bambou, un support biodégradable et un mélange de deux ou plusieurs de ces composés.

Selon l'invention, le substrat de culture peut comprendre également des rhizomes et/ou des graines et/ou des spores et/ou des fragments de plante.

Le substrat de culture peut, par exemple, comprendre en outre, toute substance permettant de stimuler la croissance de la plante, par exemple, au moins un engrais, par exemple une hormone de germination ou une hormone de croissance.

Le substrat de culture peut, par exemple, comprendre en outre, toute substance permettant de protéger la plante des agressions extérieures, par exemple, au moins un produit phytosanitaire.

Selon l'invention, on entend par « produit phytosanitaire », tout produit utilisé pour soigner ou prévenir les maladies des plantes. Il peut s'agir par exemple d'une substance active, d'origine chimique ou naturelle, ou d'une association de plusieurs de ces substances actives, de microorganismes.

Le substrat de culture peut, par exemple, comprendre en outre, tout moyen connu de l'homme du métier pour maintenir le substrat de culture, les graines, plants et/ou spores dans les espaces intergranulaires ou sur les éléments granulaires dépourvus de liant. Par exemple, le moyen pour maintenir le substrat de culture, les graines, plants et/ou spores peut être une résine, un support en fibre de noix de coco, du carton et de la pate à papier.

Selon l'invention, on entend par « bombe végétale », un agglomérat comprenant des graines et un substrat de culture tel que défini ci-dessus. Avantageusement, une bombe végétale comprend tous les éléments nécessaires à la germination rapide de la graine. Par exemple, la bombe végétale peut comprendre des graines, de la terre et des engrais.

Selon l'invention, les bombes végétales peuvent avoir un diamètre moyen compris entre 10 mm et 150 mm, par exemple entre 10 mm et 100 mm, par exemple entre 15 et 50 mm, par exemple entre 15 mm et 40 mm.

Selon l'invention, on entend par « support biodégradable », tout support permettant de maintenir un substrat de culture ou des plantes dans des espaces intergranulaires dépourvus de liant ou des creux, et se dégradant dans le temps. Par exemple, le support biodégradable peut être composé de fibre de noix de coco, de carton et/ou de pate à papier.

Selon l'invention, on entend par « éléments granulaires », des éléments solides de nature organique, minérale ou synthétique. Les éléments granulaires sont par exemple choisis dans le groupe comprenant des cailloux, des galets, des billes d'argiles, des graviers, du bois, du polystyrène expansé et du basalte.

Selon l'invention, les éléments granulaires peuvent avoir tout diamètre moyen permettant de former des espaces intergranulaires permettant de loger au moins une graine, un plant, une spore ou un rhizome. Par exemple, le diamètre moyen des éléments granulaires peut aller de 10 mm à 150 mm, par exemple de 10 mm à 100 mm, par exemple de 15 à 50 mm, par exemple de 15 mm à 40 mm.

Selon l'invention, on entend par « espace intergranulaire », les espaces présents entre les éléments granulaires qui ne sont pas remplis de liant. Il s'agit notamment des espaces entre les éléments granulaires qui dépassent du liant. Ces espaces intergranulaires peuvent être utilisés selon l'invention pour placer des graines et éventuellement de la terre.

Selon l'invention, on entend par « liant », toute substance ayant la capacité de passer de l'état plastique à l'état solide et permettant d'assembler les éléments granulaires entre eux. Par exemple, le liant peut être un liant hydraulique. Par exemple, le liant le liant hydraulique peut être un mélange d'eau et de ciment.

Selon l'invention, on entend par « liant hydraulique », tout produit ayant la propriété de durcir au contact de l'eau et qui, après durcissement, conserve sa résistance et sa stabilité même sous l'eau. Par exemple, le liant peut comprendre un mélange d'eau et de ciment.

Par exemple le ciment peut être choisi dans le groupe comprenant un ciment Portland, un ciment Portland au laitier, un ciment Portland à la fumée de silice, un ciment Portland à la pouzzolane, un ciment Portland aux cendres volantes, un ciment Portland aux schistes calcinées, un ciment Portland au calcaire, un ciment Portland composé, un ciment de haut fourneau, un ciment pouzzolanique ou un ciment composé. De tels ciments peuvent par exemple être fournis par Lafarge Ciments, Vicat ou Mapei France.

Selon l'invention, le ciment et l'eau son mélangé dans des conditions connu de l'homme du métier pour obtenir un liant suffisamment fluide pour s'écouler entre les éléments granulaires et les lier. La proportion d'eau dans le mélange eau-ciment est généralement comprise entre 20% et 40% en poids, par exemple entre 25% et 35%, par exemple 33% en poids.

Selon l'invention, le liant peut comprendre un additif. On entend par « additif », toute substance capable d'améliorer ou de conférer certaines qualités du béton. Par exemple, les additifs sont choisis dans le groupe comprenant des fibres, des armatures métalliques et, des adjuvants.

Par exemple, l'additif peut être des fibres organiques, des fibres minérales, des fibres synthétiques ou le mélange de deux ou trois de ces fibres. Par exemple, l'additif peut être sous forme de fibres choisies dans le groupe comprenant les fibres de verre, les fibres de carbone et les fibres métalliques. Par exemple, l'additif peut être des fibres synthétiques choisies dans le groupe comprenant les fibres polypropylènes, les fibres acryliques et les fibres d'aramides.

Selon l'invention, le liant peut par exemple comprendre des fibres choisies dans le groupe comprenant des fibres de verre, des fibres de carbone et des fibres métalliques.

Selon l'invention, le liant peut par exemple comprendre des fibres synthétiques choisies dans le groupe comprenant des fibres polypropylènes, des fibres acryliques, des fibres d'aramides.

Par exemple, l'additif peut être un adjuvant choisi dans le groupe comprenant les plastifiant réducteurs d'eau, les superplastifiants, les accélérateurs de prise et de durcissement, les retardateurs de prise, les entraîneurs d'air, les hydrofuges de masse et les rétenteurs d'eau. Par exemple, l'additif peut être de l'hydrobéton.

Selon l'invention, les éléments granulaires et/ou le liant peuvent être colorés. Par exemple, les éléments granulaires et/ou le liant peuvent être colorés à l'aide d'un ou plusieurs agents de coloration choisi dans le groupe comprenant les pigments, les oxydes colorants et la fluorescéine. La fluorescéine présente par exemple l'avantage de changer de teinte en fonction du taux d'humidité. Cela présente un avantage pour l'entretien des plantes, notamment en tant qu'indicateur de la réserve utile en eau.

La présente invention a également pour objet un béton garni d'au moins une plante obtenu par un procédé selon l'invention.

Selon l'invention, ce béton peut par exemple être un béton drainant.

La présente invention a également pour objet l'utilisation d'un béton garni d'au moins une plante selon l'invention, pour la fabrication d'un mur, d'un habillage de façade, d'un élément préfabriqué ou d'objets ornementaux.

Selon l'invention, on entend par « élément préfabriqué », tout objet permettant par exemple la construction d'une structure ou d'objet ornementaux. Par exemple la structure peut être un bâtiment, un mur, par exemple un mur antibruit. Par exemple, un élément préfabriqué peut être tout élément choisi dans le groupe comprenant une plaque murale, un parpaing et un pavé.

Selon l'invention, on entend par « objets ornementaux », tout objet utile ou décoratifs pouvant être fabriqué avec du béton. Par exemple, les objets ornementaux peuvent être un banc, une table, une colonne, une garniture de colonnes, une sculpture, des panneaux d'habillage pour façade d'immeuble, un vase, un récipient fleuri d'appartement, un bac à fleurs, une poubelle, un abri de bus.

La présente invention fournit un procédé de fabrication d'un béton garni d'au moins un végétal, un béton garnit d'au moins un végétal obtenu par ce procédé pouvant être utilisé en tant qu'objet ornemental ou pour la fabrication d'un mur, d'un habillage de façade ou d'un élément préfabriquée.

D'autres avantages pourront encore apparaître à l'homme du métier à la lecture des exemples ci-dessous, illustrés par les figures annexées, donnés à titre illustratif et non limitatif.

### Brève description des figures

- La figure 1A représente un schéma de panneaux muraux, réalisés selon le procédé de l'invention, disposés contre un mur, en coupe transversale.
- La figure 1B représente un schéma de panneaux muraux, réalisés selon le procédé de l'invention avec une laitance de béton de fibre ou en béton haute performance (Befup), disposés contre un mur, en coupe transversale.
- La figure 1C représente des panneaux porteurs, réalisés selon le procédé de l'invention, en coupe transversale.
- La figure 2 représente un schéma de parpaings creux, réalisés selon le procédé de la présente invention, vue de face superposés les uns au dessus des autres.
- La figure 3 est un agrandissement de la section 1 de la figure 2 vus de face. Cette figure représente un drain disposé longitudinalement entre la partie inférieure d'un premier parpaing et la partie supérieure d'un deuxième parpaing.
- La figure 4 est un agrandissement de la section 2 de la figure 2 représenté en perspective.
- La figure 5A représente un banc vu de coté, réalisé selon le procédé de l'invention avec une laitance au moment de la sortie du moule de fabrication. La partie supérieure du banc est orientée vers le bas.
- La figure 5B représente le banc vu de coté selon la figure 5A après 28 jours de séchages. La partie supérieure du banc est orientée vers le haut.
- La figure 5C représente le banc vu du dessous selon la figure 5B.

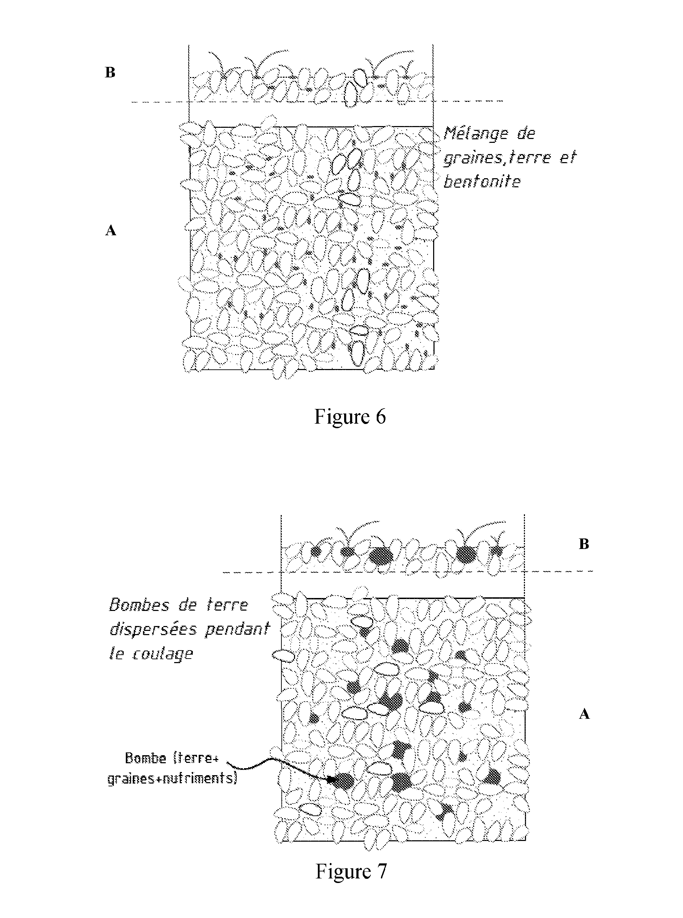

- La figure 6 représente un schéma d'un béton réalisé selon la présente invention avec un mélange de graines, terre et bentonite, vu du dessus (A) ou en coupe transversale (B).
- La figure 7 représente un schéma d'un béton réalisé selon la présente invention avec bombes de terres dispersées pendant le coulage, terre et bentonite, vu du dessus (A) ou en coupe transversale (B).
- La figure 8 représente un schéma d'un béton réalisé selon la présente invention avec des emplacements prévus pour recevoir des plantes ou des plantes en racks, vu du dessus (A) ou en coupe transversale (B).
- La figure 9 représente un schéma d'un béton réalisé selon la présente invention avec des creux permettant de recevoir des plantes ou des plantes en godets, vu du dessus (A) ou en coupe transversale (B).

### EXEMPLES DE PROTOCOLES DE MISE EN OEUVRE DE L'INVENTION

### Exemple 1: Exemple de réalisation d'un panneau mural

### Exemple 1.1 : panneau avec des graines de Trèfle incarnat (Trifolium incarnatum L.)

On a déposé 84,3 kg de granulats de basalte concassé ayant un diamètre moyen de 35 mm dans un moule rectangulaire en bois de 250 cm de longueur, 100 cm de largeur et de 8 cm de profondeur.

On a préparé une laitance en mélangeant 23 kg de ciment Portland (Cemex, France) dans 10,5 litres d'eau jusqu'à homogénéité du mélange.

On a coulé la laitance dans le moule rempli de granulats de manière à ce que des granulats émergent du liant, faisant apparaitre des espaces intergranulaires dépourvus de liant.

On a laissé sécher pendant 28 jours, ce qui a permis d'atteindre 80% de la résistance finale du béton. Les inventeurs ont en effet constaté que ce % correspond au séchage minimum permettant aux graines qui sont ensuite placées dans les espaces intergranulaires de germer. En deçà de ce pourcentage, les graines ne germent pas ou très mal. Au-delà, les graines germent.

On a disposé des graines de *Trifolium incarnatum L.* dans les espaces intergranulaires dépourvus de liant.

Au bout de 3 jours, les graines ont germé, les racines se sont s'agrippées au béton et la plante a émergée des granulats.

Au-delà de l'aspect esthétique substantiel, les inventeurs ont constaté avec surprise que les espaces intergranulaires dans lesquels des graines avaient été placées se sont garnis de plantes qui croissent tout à fait normalement et peuvent être entretenues soit par les conditions météorologiques naturelles, pluie et/ou humidité de l'air, soit par une aspersion régulière, pulvérisation ou arrosage du béton. Ce résultat est tout à fait remarquable compte tenu de la jeunesse du béton et de son caractère a priori nocif pour la croissance de plantes. Les inventeurs de la présente ont donc mis au point un procédé permettant de garnir un béton de plantes dans un délai très court suivant sa constitution, ce qui n'a jamais été réalisé auparavant.

### Exemple 1.2 : panneau avec des graines et de la terre

On a reproduit le protocole de l'exemple 1.1 en disposant, en plus des graines, de la terre dans les espaces intergranulaires dépourvus de liant.

La terre utilisée est une terre de bruyère.

Au bout de 3 jours, les inventeurs ont constaté la germination de la graine, l'agrippement des racines sur le liant et dans les espaces intergranulaires et l'émergence des plantes.

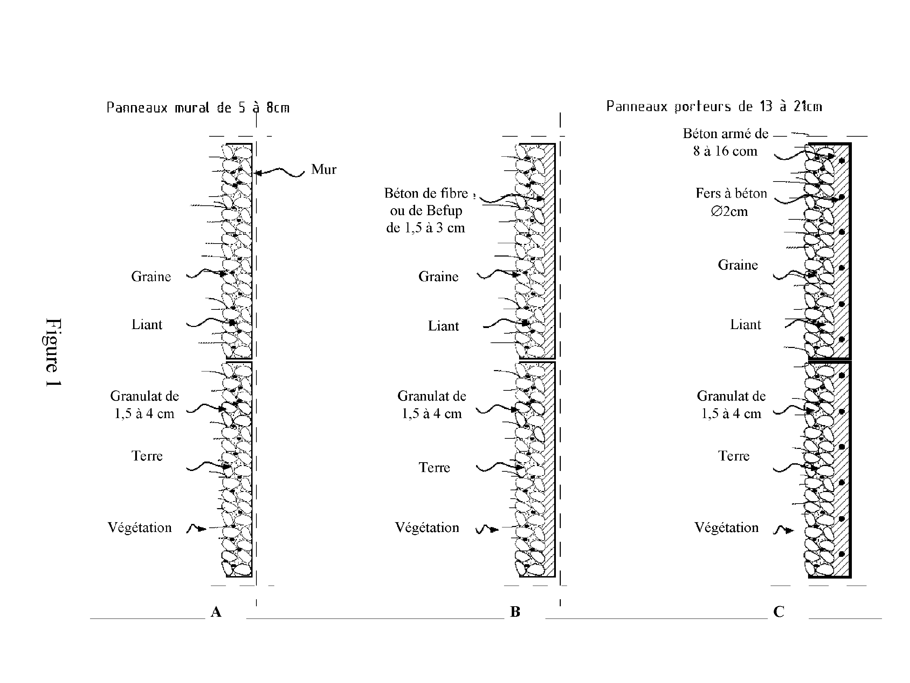

Les figures 1A et 1B représentent schématiquement les panneaux muraux obtenus dans cet exemple. Différentes épaisseurs ont été réalisées.

Sur les figures 1A et 1 B, on voit les granulats, le liant et l'espace intergranulaire créé en surface par l'émergence des granulats du liant. Cet espace est utilisé pour mettre des graines et de la terre comme indiqué ci-dessus.

### Exemple 1.3 : panneau avec des plants de Joubarbe du calcaire

On a reproduit le protocole de l'exemple 1.1 en utilisant des plants de joubarbe du calcaire *(Sempervivum calcareum).*

Au bout de 9 jours, les inventeurs ont constaté l'agrippement des racines sur le liant et dans les espaces intergranulaires et l'émergence des plantes.

### Exemple 2: Exemple de réalisation d'un panneau porteur

On a déposé des granulats de basalte concassé ayant un diamètre moyen de 35 mm dans un moule rectangulaire en bois de 250 cm de longueur, 100 cm de largeur et de 8 cm de profondeur.

On a préparé une laitance de la même manière que présenté à l'exemple 1.1.

Des fers à béton sont placés dans le moule.

On a laissé sécher pendant 28 jours, ce qui permet d'atteindre 80% de la résistance finale du béton.

On a disposé des graines de *Trifolium incarnatum L.* dans les espaces intergranulaires dépourvus de liant.

Au bout de 3 jours, les graines ont germé, les racines se sont s'agrippées au béton et la plante a émergée des granulats.

La figure 1C représente schématiquement le panneau porteur obtenu suivant ce protocole.

Sur la figure 1C, on voit les granulats, le liant et l'espace intergranulaire créé en surface par l'émergence des granulats du liant. Cet espace est utilisé pour mettre des graines et de la terre comme indiqué ci-dessus.

Là aussi, les résultats sont remarquables, avec une excellente croissance des plantes et un résultat esthétique.

### Exemple 3: Exemple de réalisation de parpaing creux

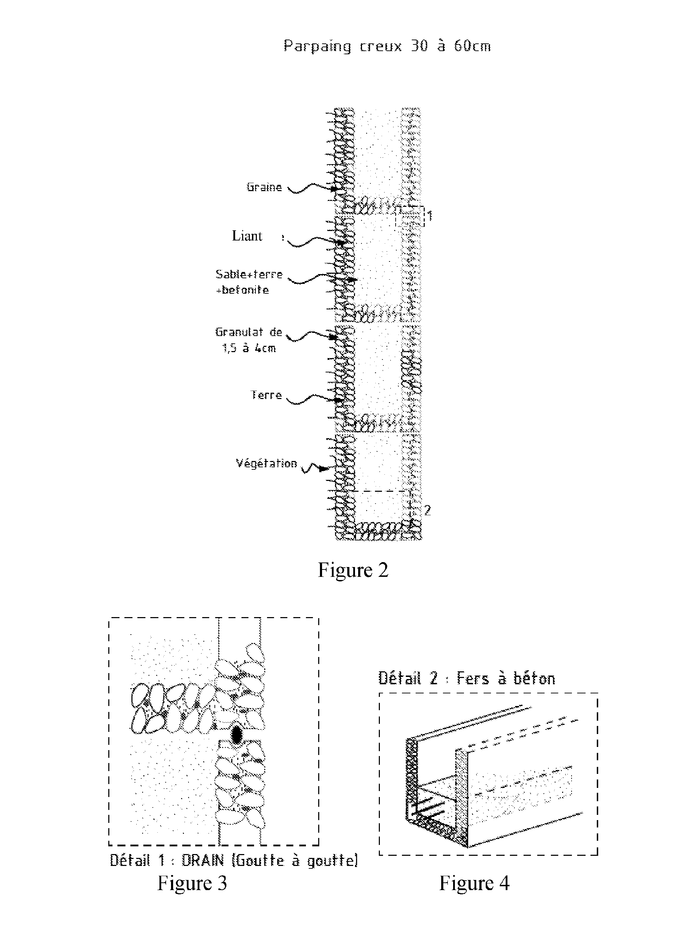

On a déposé des granulats de cailloux ayant un diamètre moyen de 30 mm dans un moule de forme permettant la production d'un parpaing comme présenté dans la figure 2.

On a préparé une laitance en mélangeant de la même manière que présenté à l'exemple 1.1. La quantité de ciment et d'eau a été adaptée au volume du moule.

Les parpaings ont ensuite été disposés les uns au dessus des autres (figures 2 et 3). Des drains en PVC de 20 mm de diamètre ont été placés entre chaque parpaing comme présenté sur la figure 3. Ces drains permettant un écoulement d'un liquide d'arrosage (eau et/ou solution nutritive de croissance pour les plantes). Ces drains permettent également d'alimenter les plantes en eau usée (« eau grise »).

La figure 4 représente un parpaing creux, rempli partiellement et dans lequel des fers à béton sont intégrés pour assurer le maintien des parpaings les uns avec les autres.

### Exemple 4: Exemple de réalisation d'un banc avec un béton garni selon l'invention

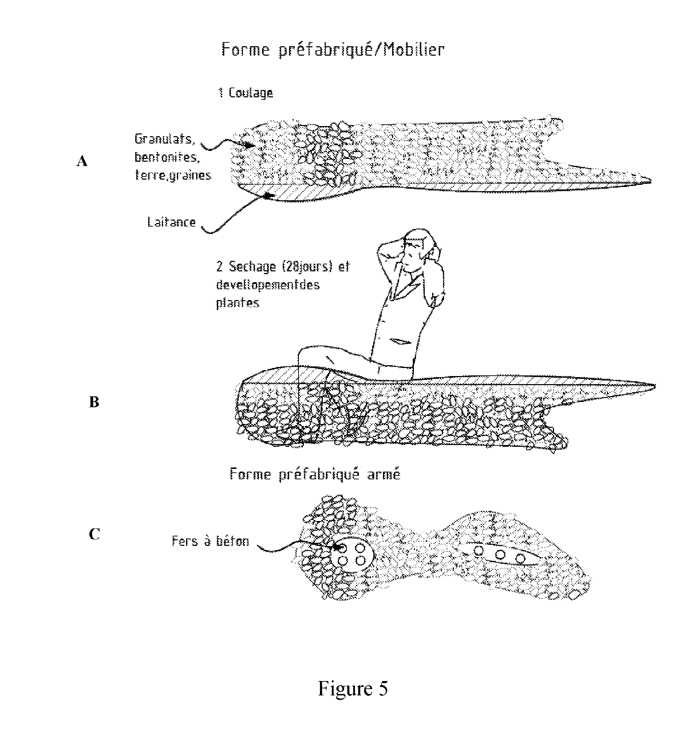

La figure 5 représente schématiquement, sous différentes vues, le banc obtenu dans cet exemple. La surface supérieure du banc, l'assise, est constituée de béton lisse. La surface verticale du banc est constituée du béton garni selon l'invention.

Pour fabriquer ce banc, on a procédé de la manière suivante:
On a déposé des granulats de cailloux ayant un diamètre moyen de 35 mm dans un moule présentant la forme de banc présentée sur la figure 5. Ce moule était en banche.
On a préparé une laitance de la même manière que dans l'exemple 1.1. La quantité de ciment et d'eau a été adaptée au volume du moule.

Le banc présenté à la figure 5 a ainsi été obtenu.

### Exemple 5: Exemple de réalisation d'un panneau à rack

On a réalisé un panneau en béton selon l'invention présentant des creux destinés à recevoir des plants ou plantes en rack.

Le béton et les granulats utilisés sont ceux décrits dans l'exemple 1. Le protocole utilisé est également celui de l'exemple 1.

Le moule utilisé présente des formes permettant de mouler dans le béton des creux présentant la forme exacte des racks à recevoir.

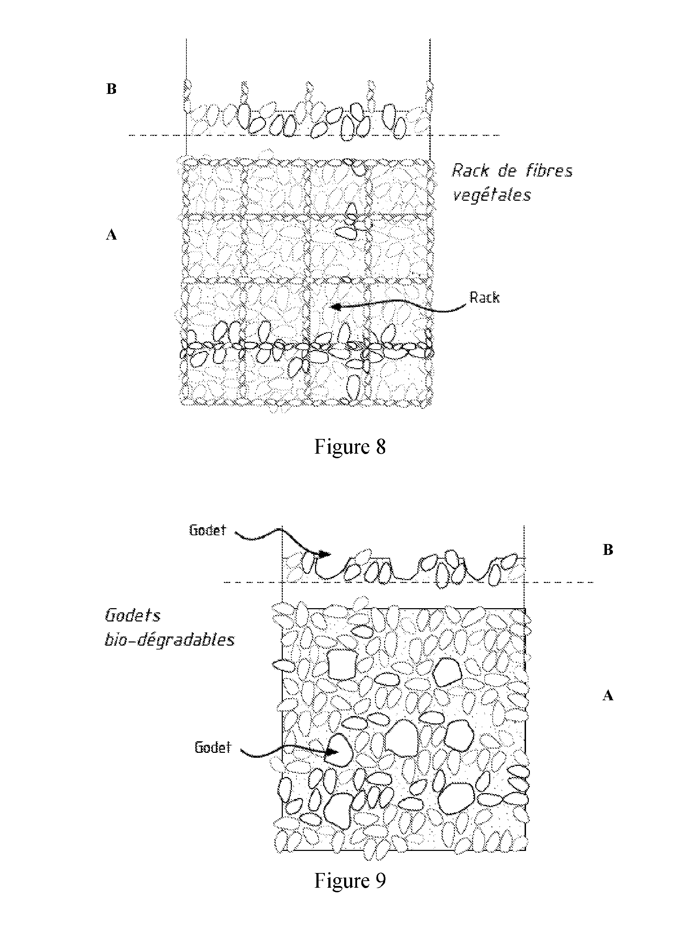

La figure 8 représente le panneau de béton à creux obtenu dans cet exemple vu en coupe latérale (figure 8B) et du dessus (figure 8A).

### Exemple 6: Exemple de réalisation d'un panneau à creux

On a réalisé un panneau en béton selon l'invention présentant des creux destinés à recevoir des plants ou plantes en godets.

Le béton et les granulats utilisés sont ceux décrits dans l'exemple 1. Le protocole utilisé est également celui de l'exemple 1.

Le moule utilisé présente des formes permettant de mouler dans le béton des creux présentant la forme exacte des godets à recevoir. Les godets présentent différentes formes.

La figure 9 représente le panneau de béton à creux obtenu dans cet exemple vu en coupe latérale (figure 9B) et du dessus (figure 9A). Les différentes formes permettant de recevoir différentes formes de godet sont représentées sur cette figure.

Des godets biodégradables ont ensuite été disposés dans les creux. Ces godets contenaient chacun des graines de *Sedum floriferum.*

Au bout de 8 jours, les premiers germes de plantes sont apparus.

## Revendications

1. Procédé de fabrication d'un béton garni d'au moins une plante comprenant les étapes successives suivantes:
**(a)** disposition d'éléments granulaires dans un moule,
**(b)** coulage d'un liant formant avec les éléments granulaires le béton, une partie desdits éléments granulaires émergeant dudit liant et formant des espaces intergranulaires dépourvus de liant,
**(c)** séchage du béton au moins à 80% de sa résistance finale, et
**(d)** application sur le béton séché au moins à 80% de sa résistance finale de graines, de spores, de fragments de plante ou de plants dans des espaces intergranulaires dépourvus de liant.

2. Procédé selon la revendication 1, ledit coulage de l'étape (b) étant réalisé dans un moule prévoyant des creux permettant l'introduction d'un substrat de culture.

3. Procédé selon la revendication 1 ou 2, ledit procédé comprenant une étape supplémentaire **(x)** précédente, successive ou concomitante à l'étape **(d)** consistant à appliquer un substrat de culture dans des espaces intergranulaires dépourvus de liant ou dans les creux.

4. Procédé selon la revendication 3, dans lequel le substrat de culture est choisi dans le groupe comprenant de la gélatine, de l'agar agar, de la pectine, du gel de konjac, une gelée, de la terre, de la terre arable, de l'argile, du limon, du terreau, un engrais, de la paille, une bombe végétale, des fibre de bois, des fibre de bambou, un support biodégradable et un mélange de deux ou plusieurs de ces composés.

5. Procédé selon l'une quelconque des revendications 1 à 4, dans lequel les éléments granulaires sont choisis dans le groupe comprenant des cailloux, des galets, des billes d'argiles, des graviers, du bois, du polystyrène expansé et du basalte.

6. Procédé selon l'une quelconque des revendications 1 à 5, dans lequel le liant est un liant hydraulique.

7. Procédé selon la revendication 6, dans lequel le liant hydraulique est un mélange d'eau et de ciment.

8. Procédé selon l'une quelconque des revendications 1 à 7, dans lequel le liant comprend en outre un additif choisi dans le groupe comprenant des fibres, des armatures métalliques et des adjuvants.

9. Procédé selon l'une quelconque des revendications 1 à 7, dans lequel le liant comprend des fibres choisies dans le groupe comprenant des fibres organiques, des fibres minérales, des fibres synthétiques et le mélange de deux ou trois de ces fibres.

10. Procédé selon l'une quelconque des revendications 1 à 7, dans lequel le liant comprend des fibres choisies dans le groupe comprenant des fibres de verre, des fibres de carbone et des fibres métalliques.

11. Procédé selon l'une quelconque des revendications 1 à 7, dans lequel le liant comprend des fibres synthétiques choisies dans le groupe comprenant des fibres polypropylènes, des fibres acryliques, des fibres d'aramides.

12. Procédé selon l'une quelconque des revendications 1 à 11, dans lequel les graines sont enrobées d'une gangue, ladite gangue comprenant des éléments nutritifs et/ou protecteurs et/ou adhésifs et/ou stimulant la germination.

13. Procédé selon l'une quelconque des revendications 1 à 12, dans lequel les graines, les spores, les fragments de plante ou les plants appartiennent à une ou plusieurs familles choisies dans le groupe comprenant les légumineuses, les succulentes, les calcicoles, les plantes à stolon.

14. Béton garni d'au moins une plante obtenu par un procédé selon l'une quelconque des revendications 1 à 13.

15. Utilisation d'un béton garni d'au moins une plante selon la revendication 14, pour la fabrication d'un mur, d'un habillage de façade, d'un élément préfabriqué ou d'objets ornementaux.
